# EUROPEAN PATENT APPLICATION

(11) **EP 4 806 739 A1**
(43) Date of publication of application: **16.09.2026**
(21) Application number: 26156224.3
(22) Date of filing: 04.02.2026
(51) Int. Cl.: B60T 13/22, B66F 9/075, F16D 55/40, F16D 65/18

(54) **HYDRAULIC BRAKE DEVICE FOR INDUSTRIAL VEHICLE**

(30) Priority: 12.03.2025 JP 2025039000
(71) Applicant: KABUSHIKI KAISHA TOYOTA JIDOSHOKKI, Kariya-shi, Aichi 448-8671 (JP)
(72) Inventor: MATSUKI, Takanori, Kariya-shi, Aichi, 448-8671 (JP)
(74) Representative: TBK

(57) **Abstract**

A hydraulic brake device (32, 80) for an industrial vehicle (10) includes a hydraulic pressure generator (33), a brake unit (34), a hydraulic fluid passage (35) including a first hydraulic fluid passage portion (71), and a cylinder mechanism (36, 81) having a cylinder hydraulic fluid chamber (63, 90). The cylinder mechanism (36, 81) includes a cylinder (51, 82), a cylinder cover (52), a piston (53, 83), a piston rod (54, 100, 110), and a blocking member. The piston rod (54, 100, 110) has an external screw portion (69) and an operating portion (55, 101). The cylinder cover (52) has an internal screw portion (62). With the rotation of the piston rod (54, 100, 110), the blocking member blocks the cylinder hydraulic fluid chamber (63, 90) from the first hydraulic fluid passage portion (71) and the piston (53, 83) is moved.

## Description

### BACKGROUND ART

The present invention relates to a hydraulic brake device for an industrial vehicle.

As a conventional technique relating to a hydraulic brake device for an industrial vehicle, for example, a negative brake release device for a construction vehicle disclosed in Japanese Patent Application Publication No. H10-68436 has been known. The negative brake release device disclosed in the Publication includes a hand pump through which a hydraulic pump and a brake cylinder chamber of a hydraulic traveling motor are connected to each other. When a negative brake is released, a brake release pressure is obtained by pushing a piston into a cylinder chamber of the hand pump, and hydraulic fluid having the brake release pressure is supplied to the brake cylinder chamber.

In the hand pump of the negative brake release device, a pipe port connected to the hydraulic pump in the cylinder chamber is located closer to a position at which the piston starts to be pushed than a pipe port connected to the brake cylinder chamber of the hydraulic traveling motor. In a state where the piston has been pushed into the cylinder chamber, the piston closes the pipe port connected to the hydraulic pump and fluid pressure in the cylinder chamber is increased. In order to prevent the hydraulic fluid from leaking from the cylinder chamber, a seal for preventing the leak of the hydraulic fluid is provided between the cylinder chamber and the piston. Furthermore, the hand pump includes a handle for pushing the piston in, an elastic body for applying an urging force in a direction in which the piston is restored, and a nut for preventing the handle from loosening, as an operating mechanism of the piston.

However, in the negative brake release device disclosed in the Publication, the piston is pushed in by turning the handle while the handle is being pressed against the piston, which causes wear at a sliding contact portion between the piston and the handle. When wear debris are generated due to the wear at the sliding contact portion, the wear debris may not only interfere with the sliding of the piston in the cylinder chamber but also may damage the cylinder and the piston. In addition, in the negative brake release device disclosed in the Publication, although the seal for preventing the leak of the hydraulic fluid is attached to a groove formed in an inner peripheral surface of the cylinder chamber, the seal may come off during reciprocal motion of the piston. In particular, the seal that has deteriorated over time due to use of the hand pump is likely to be cut off and come off from the groove.

The present invention has been made in view of the above-described problems, and is directed to providing a hydraulic brake device for an industrial vehicle that is capable of releasing a braking force of a negative brake by manual operation and that prevents wear debris from being generated due to sliding contact.

### SUMMARY

In accordance with an aspect of the present invention, there is provided a hydraulic brake device for an industrial vehicle that includes a hydraulic pressure generator configured to generate hydraulic pressure, a brake unit configured to generate a braking force, a hydraulic fluid passage through which the hydraulic pressure generator and the brake unit are connected to each other, and a cylinder mechanism having a cylinder hydraulic fluid chamber and provided in the hydraulic fluid passage. The hydraulic brake device is configured to release the braking force of the brake unit by using the hydraulic pressure from the hydraulic pressure generator and configured to cause the brake unit to generate the braking force by releasing the hydraulic pressure in the hydraulic fluid passage. The hydraulic fluid passage includes a first hydraulic fluid passage portion through which the hydraulic pressure generator and the cylinder hydraulic fluid chamber are connected to each other and a second hydraulic fluid passage portion through which the cylinder hydraulic fluid chamber and the brake unit are connected to each other. The cylinder mechanism includes a cylinder having a cylinder chamber, a cylinder cover that closes an opening of the cylinder, a piston that is reciprocally movable in the cylinder chamber, a piston rod that is coupled to the piston and that extends out from the cylinder chamber to an outside of the cylinder, and a blocking member that blocks the cylinder hydraulic fluid chamber from the first hydraulic fluid passage portion depending on a position of the piston relative to the cylinder. The cylinder hydraulic fluid chamber is defined by the cylinder and the piston. The piston rod has an external screw portion and an operating portion that is formed in an end portion of the piston rod outside the cylinder and that is used to rotate the piston rod and change a position of the piston. The cylinder cover has an internal screw portion into which the external screw portion is screwed. With the rotation of the piston rod via the operating portion, the blocking member blocks the cylinder hydraulic fluid chamber from the first hydraulic fluid passage portion and the piston is moved so that the hydraulic pressure in the cylinder hydraulic fluid chamber is increased for releasing the braking force of the brake unit.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a side view illustrating an overview of a forklift truck on which a hydraulic brake device according to a first embodiment is mounted;
FIG. 2 is a schematic configuration diagram illustrating a schematic configuration of the hydraulic brake device of the forklift truck;
FIG. 3 is a longitudinal cross-sectional view illustrating a cylinder mechanism of a hydraulic cylinder;
FIG. 4 is a perspective view illustrating a main part of the forklift truck with a seat stand open;
FIG. 5A is a longitudinal cross-sectional view of the cylinder mechanism in which a piston blocks a cylinder hydraulic fluid chamber from a first hydraulic fluid passage portion, and FIG. 5B is a longitudinal cross-sectional view of the cylinder mechanism in which the piston is brought to a position closest to a bottom of the cylinder;
FIG. 6A is a longitudinal cross-sectional view of a cylinder mechanism of a hydraulic brake device according to a second embodiment, and FIG. 6B is a longitudinal cross-sectional view of the cylinder mechanism in which a valve element blocks a cylinder hydraulic fluid chamber from a first hydraulic fluid passage portion; and
FIG. 7A is a longitudinal cross-sectional view illustrating another example of an operating portion, and FIG. 7B is a longitudinal cross-sectional view illustrating another example of a piston rod.

### DESCRIPTION OF EMBODIMENTS

### (First embodiment)

The following will describe a hydraulic brake device for an industrial vehicle according to a first embodiment with reference to the accompanying drawings. The industrial vehicle of the present embodiment is a forklift truck, such as a counterweight type battery-powered forklift truck. Here, terms of "front and back," "left and right," and "up and down" for identifying directions are determined based on a state where an operator of the forklift truck sitting in the driver's seat in the driver's compartment is oriented in a direction in which the forklift truck travels forward.

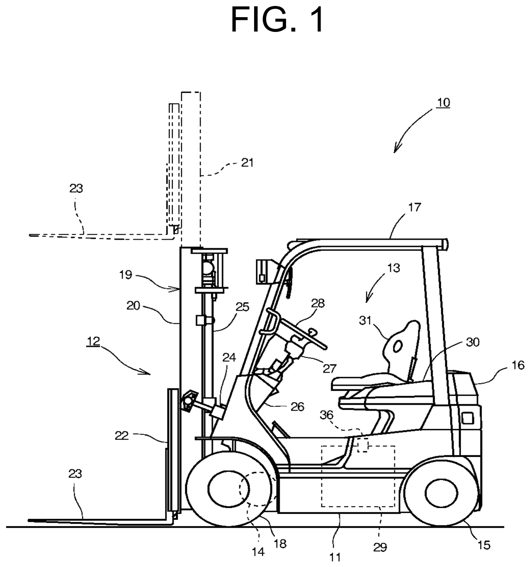

As illustrated in FIG. 1, a battery-powered forklift truck (hereinafter, simply referred to as a "forklift truck") 10 includes a vehicle body 11 and a load handling device 12 provided in the front of the vehicle body 11. A driver's compartment 13 is provided near the center of the vehicle body 11. The forklift truck 10 includes front wheels 14 provided in the front of the vehicle body 11 and rear wheels 15 provided in the rear of the vehicle body 11. The front wheels 14 serve as driving wheels, and the rear wheels 15 serve as steered wheels. A counterweight 16 is provided on a rear portion of the vehicle body 11. The vehicle body 11 is provided with an overhead guard 17 that covers the driver's compartment 13. The vehicle body 11 is equipped with an electric motor 18 that serves as a driving source for traveling. A rotational force of the electric motor 18 is transmitted to the front wheels 14, which serve as the driving wheels.

The load handling device 12 includes a mast 19 having a pair of outer masts 20 and a pair of inner masts 21. The pair of the left and right outer masts 20 is provided with the pair of the left and right inner masts 21 that is capable of moving up and down inside the outer masts 20. The load handling device 12 includes a lift bracket 22 that moves up and down along the inner masts 21, and the lift bracket 22 is provided with a pair of left and right forks 23. A tilt cylinder 24 is provided between the vehicle body 11 and the mast 19 and is operated by supplying or discharging hydraulic fluid to or from the tilt cylinder 24. The outer masts 20 are provided with a lift cylinder 25 that is operated by supplying or discharging the hydraulic fluid to or from the lift cylinder 25 (see FIG. 1). Not only do the inner masts 21 move up and down inside the outer masts 20 but the lift bracket 22 also moves up and down with the operation of the lift cylinder 25.

An instrument panel 26 is provided in front of the driver's compartment 13. The instrument panel 26 includes a steering column 27 that supports a steering wheel 28. The vehicle body 11 is equipped with a battery 29 and also a seat stand 30 configured to be opened and closed. A driver's seat 31 is provided on the seat stand 30. The seat stand 30 is capable of remaining open without being supported by the operator.

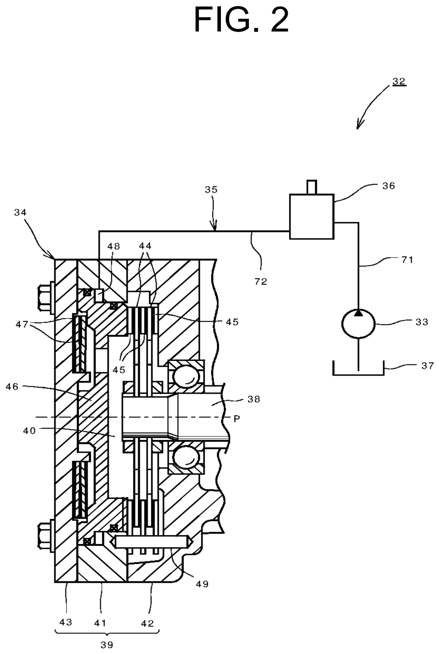

As illustrated in FIG. 2, the forklift truck 10 includes a hydraulic brake device 32. The hydraulic brake device 32 includes a hydraulic fluid pump 33 that pumps the hydraulic fluid, and a brake unit 34 that generates a braking force, a hydraulic fluid passage 35 through which the hydraulic fluid pump 33 and the brake unit 34 are connected to each other, and a cylinder mechanism 36. The hydraulic fluid pump 33 is a pump that pumps the hydraulic fluid from a hydraulic fluid tank 37 and supplies the hydraulic fluid to hydraulic devices. The hydraulic fluid pump 33 is, for example, a gear pump. The hydraulic fluid pump 33 corresponds to a hydraulic pressure generator that generates hydraulic pressure. The brake unit 34 is a negative brake that generates a braking force while not receiving the hydraulic pressure and that releases the braking force due to the hydraulic pressure. The brake unit 34 of the present embodiment is a wet brake that generates a braking force applied to a rotary shaft 38 of the electric motor 18.

The brake unit 34 includes a shaft case 39 having a multi-disc chamber 40 therein. The shaft case 39 includes a case main body 41 that is open at its both ends, a cover body 42 that covers the opening at one end of the case main body 41, and a cover body 43 that covers the opening at the other end of the case main body 41. The rotary shaft 38 is inserted in the multi-disc chamber 40. A large number of brake discs 44 each have a disc shape with holes and are disposed on an outer peripheral surface of the rotary shaft 38 by spline-fitting. The brake discs 44 each have friction surfaces perpendicular to a direction in which an axis P of the rotary shaft 38 extends. The brake discs 44 are engaged with the rotary shaft 38 by the spline-fitting so that the brake discs 44 are movable in the direction in which the axis P of the rotary shaft 38 extends and rotation of the brake discs 44 relative to the rotary shaft 38 is restricted. Accordingly, the brake discs 44 rotate integrally with the rotary shaft 38 with the rotation of the rotary shaft 38.

A large number of stators 45 each have a disc shape with holes and are disposed on an inner wall surface of the shaft case 39. The stators 45 are arranged side by side in the direction in which the axis P of the rotary shaft 38 extends in the shaft case 39 and each have friction surfaces perpendicular to the direction in which the axis P extends. The stators 45 are supported by a guiding member 49 so as to be slidable. The guiding member 49 extends in parallel with the rotary shaft 38, and one end of the guiding member 49 is fixed to the case main body 41 and the other end of the guiding member 49 is fixed to the cover body 42. Thus, the stators 45 are movable in the direction in which the axis P of the rotary shaft 38 extends.

The brake discs 44 and the stators 45 are arranged alternately in the direction in which the axis P of the rotary shaft 38 extends. Accordingly, each of the brake discs 44 is interposed between adjacent two of the stators 45. The friction surface of each of the brake discs 44 faces the friction surface of the stator 45 adjacent to the brake disc 44. The brake disc 44 closest to the electric motor 18 faces an end surface of the cover body 42. The stator 45 closest to the cover body 43 of the stators 45 faces a piston plate 46 that has a disc shape and that is disposed on the inner wall surface of the shaft case 39. The piston plate 46 is reciprocally movable relative to the case main body 41 in the direction in which the axis P of the rotary shaft 38 extends.

A disc spring 47 is interposed between the cover body 43 and the piston plate 46 and serves as an urging member. The disc spring 47 constantly applies an urging force to the piston plate 46 to press the piston plate 46 toward the stator 45. The brake unit 34 includes a brake unit hydraulic fluid chamber 48 that is defined by the case main body 41 and the piston plate 46. The brake unit hydraulic fluid chamber 48 communicates with the hydraulic fluid pump 33 through the hydraulic fluid passage 35. As a pressure in the brake unit hydraulic fluid chamber 48 increases, the piston plate 46 is moved toward the cover body 43 against the urging force of the disc spring 47. On the other hand, as the pressure in the brake unit hydraulic fluid chamber 48 decreases, the piston plate 46 presses the stators 45 in the direction in which the axis P extends. This brings the stators 45 and the brake discs 44 into contact with each other to generate the braking force applied to the rotary shaft 38. When the braking force of the brake unit 34 is released, the pressure in the brake unit hydraulic fluid chamber 48 only needs to be increased. The pressure in the brake unit hydraulic fluid chamber 48 may be released by returning the hydraulic fluid to the hydraulic fluid tank 37 through the hydraulic fluid passage 35 and the cylinder mechanism 36.

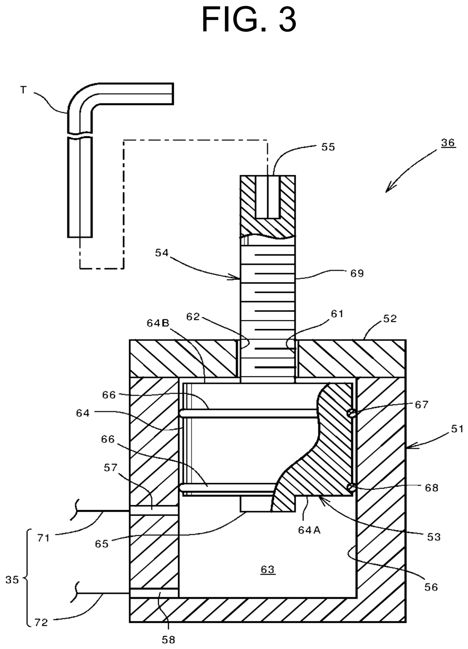

The following will describe the cylinder mechanism 36. As illustrated in FIG. 3, the cylinder mechanism 36 includes a cylinder 51, a cylinder cover 52, a piston 53, a piston rod 54, and an operating portion 55. The cylinder 51 is a member having a bottomed tubular shape, and a cylinder chamber 56 is formed inside the cylinder 51. A first cylinder port 57 and a second cylinder port 58 are formed near the bottom of the cylinder 51, and connect the cylinder chamber 56 and the outside of the cylinder 51. The first cylinder port 57 is located closer to the cylinder cover 52 than the second cylinder port 58. The cylinder cover 52 is a member that closes an open end of the cylinder 51, and a screw hole 61 with an internal screw portion 62 is formed in the cylinder cover 52.

The piston 53 is accommodated in the cylinder chamber 56. The piston 53 is reciprocally movable in the cylinder chamber 56. In this embodiment, the cylinder 51 is provided so that the piston 53 is movable up and down. That is, the cylinder cover 52 closing the cylinder 51 is located above the bottom of the cylinder 51.

The piston 53 and the cylinder 51 cooperate to define a cylinder hydraulic fluid chamber 63 that is filled with the hydraulic fluid in the cylinder chamber 56. The piston 53 has a piston main body 64 and a protrusion 65. A first annular groove 67 and a second annular groove 68 are formed on an outer peripheral surface of the piston main body 64, and sealing members 66 each having an annular shape are attached to the first annular groove 67 and the second annular groove 68. The first annular groove 67 is formed at a position where the sealing member 66 attached to the first annular groove 67 does not interfere with the first cylinder port 57 in a state where the piston 53 is displaced toward the bottom of the cylinder 51 to a maximum extent. The second annular groove 68 is formed at a position where the sealing member 66 attached to the second annular groove 68 does not interfere with the second cylinder port 58 in the state where the piston 53 is displaced toward the bottom of the cylinder 51 to a maximum extent. Furthermore, the second annular groove 68 is formed so as to be located closer to the cylinder cover 52 than the first cylinder port 57 in a state where the piston 53 is displaced toward the cylinder cover 52 to the maximum extent. It is noted that each of the sealing members 66 is an O-ring made of nitrile rubber having hydraulic fluid resistance. Here, in a case where the sealing members 66 are distinguished, the sealing member 66 attached to the first annular groove 67 is referred to as a first sealing member, and the sealing member 66 attached to the second annular groove 68 is referred to as a second sealing member.

The protrusion 65 of the piston 53 has a columnar shape and protrudes from an end surface 64A of the piston main body 64 facing the bottom of the cylinder 51. Even when the piston 53 is moved toward the bottom of the cylinder 51 and the protrusion 65 is brought into contact with the bottom of the cylinder 51, a change of an area that receives the pressure in the cylinder hydraulic fluid chamber 63 is suppressed due to the protrusion 65 of the piston 53.

The piston rod 54 is a shaft member that is connected to an end surface 64B facing the cylinder cover 52 of the piston main body 64. The piston rod 54 is formed integrally and coaxially with the piston 53. That is, the piston rod 54 and the piston 53 are integrally formed and coupled to each other. The piston rod 54 has an external screw portion 69 that is capable of being screwed into the internal screw portion 62 of the screw hole 61. A distal end portion of the piston rod 54 extends out to the outside of the cylinder 51. The operating portion 55 is formed in the distal end portion of the piston rod 54. The operating portion 55 of the present embodiment is a hexagonal hole formed so as to extend from the distal end of the piston rod 54 along its axial direction. When the piston rod 54 is rotated with a hex key T that is capable of being inserted into the hexagonal hole, the piston 53 is rotated together with the piston rod 54. The piston 53 is moved relative to the cylinder 51 in accordance with a rotational direction of the piston 53 due to the external screw portion 69 and the internal screw portion 62.

The hydraulic fluid passage 35 includes a first hydraulic fluid passage portion 71 through which the hydraulic fluid pump 33 and the cylinder hydraulic fluid chamber 63 of the cylinder mechanism 36 communicate with each other and a second hydraulic fluid passage portion 72 through which the cylinder hydraulic fluid chamber 63 of the cylinder mechanism 36 and the brake unit hydraulic fluid chamber 48 of the brake unit 34 communicate with each other. The first hydraulic fluid passage portion 71 is connected to the first cylinder port 57, and the second hydraulic fluid passage portion 72 is connected to the second cylinder port 58. When the piston 53 is brought to a position closest to the cylinder cover 52, the hydraulic fluid from the hydraulic fluid pump 33 may be supplied to the cylinder hydraulic fluid chamber 63, and furthermore, the hydraulic fluid may be supplied from the cylinder hydraulic fluid chamber 63 to the brake unit hydraulic fluid chamber 48 of the brake unit 34. In a state where the piston 53 is moved toward the bottom of the cylinder 51 and blocks the cylinder hydraulic fluid chamber 63 from the first hydraulic fluid passage portion 71, the cylinder hydraulic fluid chamber 63 communicates with the second hydraulic fluid passage portion 72. In this state, the cylinder hydraulic fluid chamber 63, the second cylinder port 58, the second hydraulic fluid passage portion 72, and the brake unit hydraulic fluid chamber 48 form a closed space. Accordingly, as the piston 53 is moved toward the bottom of the cylinder 51, the pressure in the cylinder hydraulic fluid chamber 63 is increased. That is, the hydraulic pressure to move the piston plate 46 so that the braking force of the brake unit 34 is released is generated in the cylinder hydraulic fluid chamber 63. Here, the piston 53 corresponds to a blocking member that is capable of blocking the cylinder hydraulic fluid chamber 63 from the first hydraulic fluid passage portion 71 depending on a position of the piston 53 relative to the cylinder 51, in the present invention.

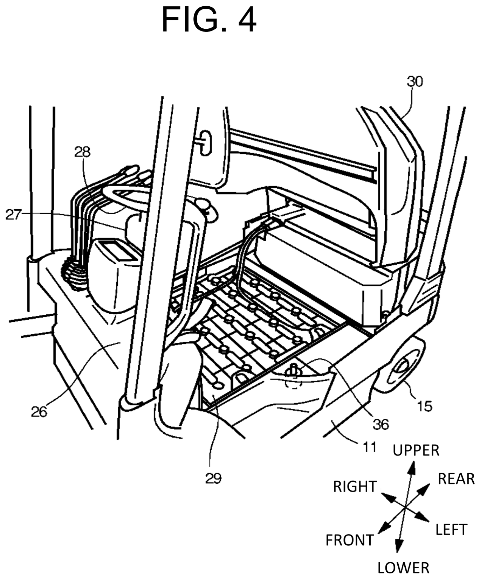

The cylinder mechanism 36 configured as described above is installed below the seat stand 30 in the vehicle body 11. More specifically, as illustrated in FIG. 4, the cylinder mechanism 36 is accommodated in a space located on a left side of the space in which the battery 29 is accommodated in the vehicle body 11. Accordingly, it may be said that when the seat stand 30 is open, the cylinder mechanism 36 is located at an easily accessible position for an operator to operate the operating portion 55 of the cylinder mechanism 36.

The following will describe operation of the hydraulic brake device 32. First, generation of a braking force of the brake unit 34 will be described. Here, it is assumed that the piston 53 of the cylinder mechanism 36 is brought to the position closest to the cylinder cover 52 (see FIG. 3). In a state where the forklift truck 10 is not in operation, the hydraulic fluid pump 33 is not driven. Accordingly, pressure in the brake unit hydraulic fluid chamber 48 of the brake unit 34 is low, and the piston plate 46 receives the urging force of the disc spring 47 in the direction in which the axis P of the rotary shaft 38 extends to press the stators 45 against the brake discs 44. This brings the stators 45 and the brake discs 44 into contact with each other to generate a braking force of the brake unit 34. That is, the hydraulic brake device 32 causes the brake unit 34 to generate the braking force by releasing hydraulic pressure in the hydraulic fluid passage 35. Thus, the forklift truck 10 is unable to move due to the braking force of the brake unit 34.

The following will describe a case where the braking force of the brake unit 34 is released. When the forklift truck 10 is driven, the hydraulic fluid pump 33 is operated to pump the hydraulic fluid and supply the hydraulic fluid to the cylinder hydraulic fluid chamber 63 of the cylinder mechanism 36 through the first hydraulic fluid passage portion 71. Furthermore, the hydraulic fluid is supplied to the brake unit hydraulic fluid chamber 48 of the brake unit 34 through the second hydraulic fluid passage portion 72 to increase the pressure of the brake unit hydraulic fluid chamber 48, and eventually, the piston plate 46 is moved in a direction away from the stators 45 against the urging force of the disc spring 47. As a result, the contact between the stators 45 and the brake discs 44 is released, and the braking force of the brake unit 34 is released. When the braking force of the brake unit 34 is released, the forklift truck 10 is allowed to move.

In a case where the hydraulic fluid is unable to be supplied to the brake unit hydraulic fluid chamber 48 of the brake unit 34 due to a failure of the hydraulic fluid pump 33, or the like, it is impossible to release the braking force of the brake unit 34. In the present embodiment, the braking force is released by moving the piston 53 of the cylinder mechanism 36. Specifically, the operator opens the seat stand 30, inserts the hex key T into the hexagonal hole of the operating portion 55, rotates the piston rod 54 in such a direction that the piston 53 is moved toward the bottom of the cylinder 51 with the hex key T. That is, the operating portion 55 is used to rotate the piston rod 54 and change a position of the piston 53. As the piston rod 54 with the external screw portion 69 is screwed into the screw hole 61 of the cylinder cover 52, the piston rod 54 is moved relative to the cylinder cover 52 with its rotation. The piston rod 54 and the piston 53 are formed integrally with each other, so that the piston 53 is moved toward the bottom of the cylinder 51 while being rotated in the cylinder chamber 56.

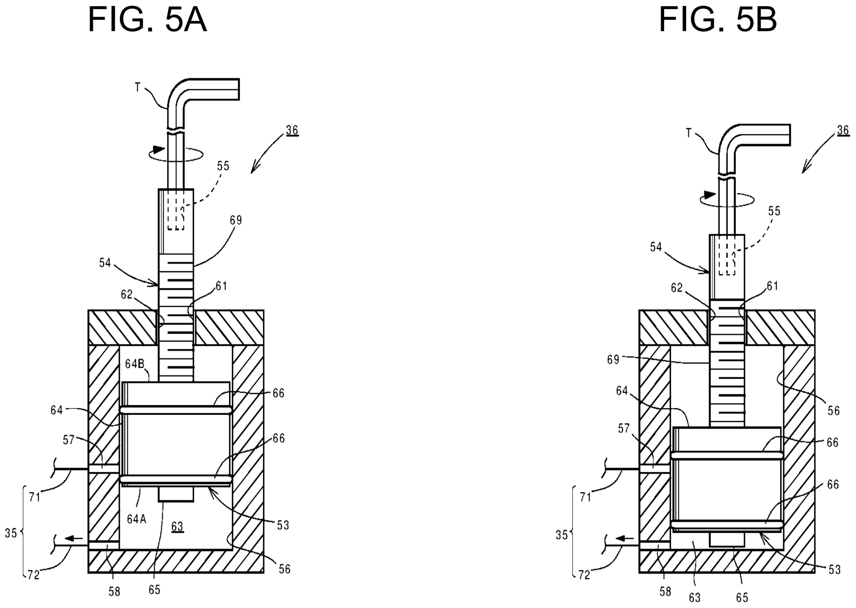

As illustrated in FIG. 5A, when the end surface 64A of the piston 53 is moved to a position beyond the first cylinder port 57, the piston 53 blocks the cylinder hydraulic fluid chamber 63 from the first hydraulic fluid passage portion 71. The cylinder hydraulic fluid chamber 63 communicates with the second hydraulic fluid passage portion 72, and the cylinder hydraulic fluid chamber 63, the second cylinder port 58, the second hydraulic fluid passage portion 72, and the brake unit hydraulic fluid chamber 48 form the closed space filled with the hydraulic fluid. Then, as illustrated in FIG. 5B, when the operator rotates the piston rod 54 in such a direction that the piston 53 is moved toward the bottom of the cylinder 51, volume in the cylinder hydraulic fluid chamber 63 is decreased, which increases the pressure in the cylinder hydraulic fluid chamber 63. As the pressure in the cylinder hydraulic fluid chamber 63 increases, the pressure in the brake unit hydraulic fluid chamber 48 also increases, and when the pressure in the brake unit hydraulic fluid chamber 48 reaches a certain level or more, the piston plate 46 is moved in a direction away from the stator 45 against the urging force of the disc spring 47. As a result, the contact between the stators 45 and the brake discs 44 is released, and the braking force of the brake unit 34 is released. When the braking force of the brake unit 34 is released, the forklift truck 10 is allowed to move.

The hydraulic brake device 32 according to the present embodiment provides the following advantageous effects.
(1) A braking force is generated in the brake unit 34 when the hydraulic pressure from the hydraulic fluid pump 33 is not available. When the operating portion 55 of the cylinder mechanism 36 is operated so that volume in the cylinder hydraulic fluid chamber 63 of the cylinder 51 is decreased by the piston 53, the piston 53 blocks the cylinder hydraulic fluid chamber 63 from the first hydraulic fluid passage portion 71 to increase hydraulic pressure in the cylinder hydraulic fluid chamber 63. The braking force of the brake unit 34 is released through the second hydraulic fluid passage portion 72 by the hydraulic pressure in the cylinder hydraulic fluid chamber 63 increased by the movement of the piston 53. The piston 53 and the piston rod 54 are coupled to each other, so that the piston rod 54 does not make sliding contact with the piston 53, and no wear occurs due to the sliding contact. Thus, it is prevented that wear debris are generated by the wear.
(2) The piston 53 is the blocking member that blocks the cylinder hydraulic fluid chamber 63 from the first hydraulic fluid passage portion 71, so that it is unnecessary to prepare a blocking member separate from the piston 53. This reduces the number of parts and manufacturing costs of the cylinder mechanism 36.
(3) The piston 53 and the piston rod 54 are formed integrally with each other. Thus, as compared with a case where the piston 53 and the piston rod 54 are separate members, the number of parts and the manufacturing costs of the cylinder mechanism 36 are reduced. Furthermore, the piston rod 54 does not make sliding contact with the piston 53, so that no wear occurs due to the sliding contact.
(4) The sealing members 66 are attached to the outer peripheral surface of the piston 53. Thus, as compared with a case where the sealing members 66 are attached to an inner peripheral surface of the cylinder 51, the sealing members 66 are always interposed between the inner peripheral surface of the cylinder 51 and the outer peripheral surface of the piston 53. Accordingly, the sealing members 66 hardly come off from the piston 53.
(5) The vehicle body 11 is equipped with the seat stand 30 that is opened and closed and that supports the driver's seat 31, and the cylinder mechanism 36 is installed in the vehicle body 11 so that the operating portion 55 is located below the seat stand 30. With this configuration, the operator can easily access the operating portion 55 of the cylinder mechanism 36 by opening the seat stand 30. In addition, since the seat stand 30 is open, the operator can easily operate the operating portion 55.
(6) The operating portion 55 is the hexagonal hole, so that even when a space around the operating portion 55 is narrow, the piston rod 54 may be rotated by using the hex key T. In addition, almost no space is needed for the operating portion 55. This increases the degree of freedom of an installation position of the cylinder mechanism 36.
(7) An axial force applied to the external screw portion 69 to be screwed into the internal screw portion 62 is generated by rotating the piston rod 54. Accordingly, a force applied to the operating portion 55 and required to rotate the piston rod 54 may be small, and the piston 53 may be moved against the pressure in the cylinder hydraulic fluid chamber 63. This reduces a physical burden of the operator.

### (Second embodiment)

The following will describe a hydraulic brake device according to a second embodiment. In this embodiment, the configuration of the cylinder mechanism is different from that in the first embodiment. In this embodiment, the same components as those in the first embodiment will be referred to the description of the first embodiment, and the same reference numerals will be used.

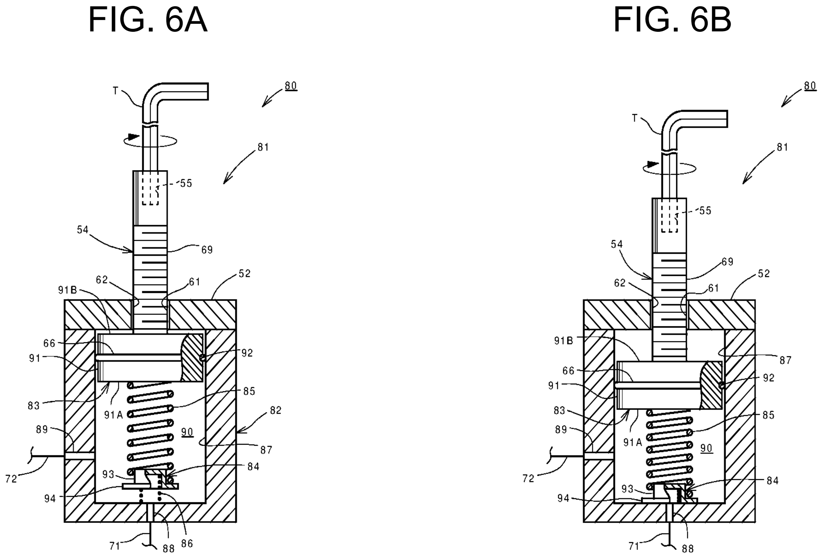

As illustrated in FIG. 6, a hydraulic brake device 80 according to the present embodiment includes a cylinder mechanism 81. The cylinder mechanism 81 includes a cylinder 82, the cylinder cover 52, a piston 83, the piston rod 54, the operating portion 55, a valve element 84, a first compression coil spring 85, and a second compression coil spring 86. The cylinder 82 is a member having a bottomed tubular shape, and a cylinder chamber 87 is formed inside the cylinder 51. A first cylinder port 88 is formed in the center of the bottom of the cylinder 82 and connects the cylinder chamber 87 and the outside of the cylinder 82. A second cylinder port 89 is formed near the bottom of the cylinder 82 and connects the cylinder chamber 87 and the outside of the cylinder 82. The first hydraulic fluid passage portion 71 is connected to the first cylinder port 88, and the second hydraulic fluid passage portion 72 is connected to the second cylinder port 89.

The piston 83 is accommodated in the cylinder chamber 87. The piston 83 is reciprocally movable in the cylinder chamber 56. In this embodiment, the cylinder 82 is provided so that the piston 83 is movable up and down. That is, the cylinder cover 52 closing the cylinder 82 is located above the bottom of the cylinder 82.

The piston 83 and the cylinder 82 cooperate to define a cylinder hydraulic fluid chamber 90 in the cylinder chamber 87. The piston 83 has a piston main body 91. An annular groove 92 is formed on an outer peripheral surface of the piston main body 91, and the sealing member 66 having an annular shape is attached to the annular groove 92. The annular groove 92 is formed at a position where the sealing member 66 attached to the annular groove 92 does not interfere with the second cylinder port 89 in a state where the piston 83 is displaced toward the bottom of the cylinder 82 to the maximum extent.

One end of the first compression coil spring 85 is attached to an end surface 91A of the piston main body 91 facing the bottom of the cylinder 51. The piston rod 54 is attached to an end surface 91B opposite to the end surface 91A. The other end of the first compression coil spring 85 is attached to the valve element 84. The valve element 84 is a member that opens and closes the first cylinder port 88. The valve element 84 has a cylindrical portion 93 and a flange portion 94 radially extending from an end of the cylindrical portion 93. The other end of the first compression coil spring 85 is fixed to a surface of the flange portion 94. The second compression coil spring 86 is interposed between the cylindrical portion 93 and the bottom of the cylinder 82. One end of the second compression coil spring 86 is fixed to the bottom of the cylinder 82, and the other end of the second compression coil spring 86 is fixed to an inner surface of the cylindrical portion 93. Thus, when the piston 83 is brought to a position closest to the cylinder cover 52, the valve element 84 is supported above the first cylinder port 88 by the first compression coil spring 85 and the second compression coil spring 86.

When the piston 83 is moved toward the bottom of the cylinder 82, the flange portion 94 is capable of being brought into close contact with the bottom of the cylinder 82 so as to enclose the first cylinder port 88. When the flange portion 94 is brought into contact with the bottom of the cylinder 82, the valve element 84 blocks the cylinder hydraulic fluid chamber 90 from the first hydraulic fluid passage portion 71. That is, the valve element 84 corresponds to the blocking member in the present invention.

When the piston 83 is brought to the position closest to the cylinder cover 52, the valve element 84 opens the first cylinder port 88, so that the hydraulic fluid from the hydraulic fluid pump 33 is supplied to the cylinder hydraulic fluid chamber 90, and furthermore, the hydraulic fluid may be supplied from the cylinder hydraulic fluid chamber 90 to the brake unit hydraulic fluid chamber 48 of the brake unit 34. When the piston 53 is moved toward the bottom of the cylinder 51, the valve element 84 closes the first cylinder port 88, that is, blocks the cylinder hydraulic fluid chamber 90 from the first hydraulic fluid passage portion 71. The cylinder hydraulic fluid chamber 90 and the second hydraulic fluid passage portion 72 communicate with each other, and the cylinder hydraulic fluid chamber 90, the second cylinder port 89, the second hydraulic fluid passage portion 72, and the brake unit hydraulic fluid chamber 48 form a closed space. As the piston 83 is moved toward the bottom of the cylinder 82, pressure in the cylinder hydraulic fluid chamber 90 is increased. That is, the hydraulic pressure for releasing the braking force of the brake unit 34 is generated in the cylinder hydraulic fluid chamber 90. The cylinder mechanism 81 configured as described above is installed below the seat stand 30 in the vehicle body 11, similarly to the first embodiment.

According to the second embodiment, the valve element 84 blocks the cylinder hydraulic fluid chamber 90 from the first hydraulic fluid passage portion 71 by moving the piston 83 to increase hydraulic pressure in the cylinder hydraulic fluid chamber 90. Thus, the braking force of the brake unit 34 is released through the second hydraulic fluid passage portion 72 by the hydraulic pressure in the cylinder hydraulic fluid chamber 90 increased by the movement of the piston 83. The piston 83 and the piston rod 54 are coupled to each other, so that the piston rod 54 does not make sliding contact with the piston 83, and no wear occurs due to the sliding contact. Thus, generation of wear debris due to the wear is prevented. In the present embodiment, even when the piston 83 is moved, the sealing member 66 is not moved to a position beyond the second cylinder port 89, so that durability of the sealing member 66 is improved.

The present invention is not limited to the above-described embodiments, but may be modified in various manners within a gist of the present invention, for example, as described below.

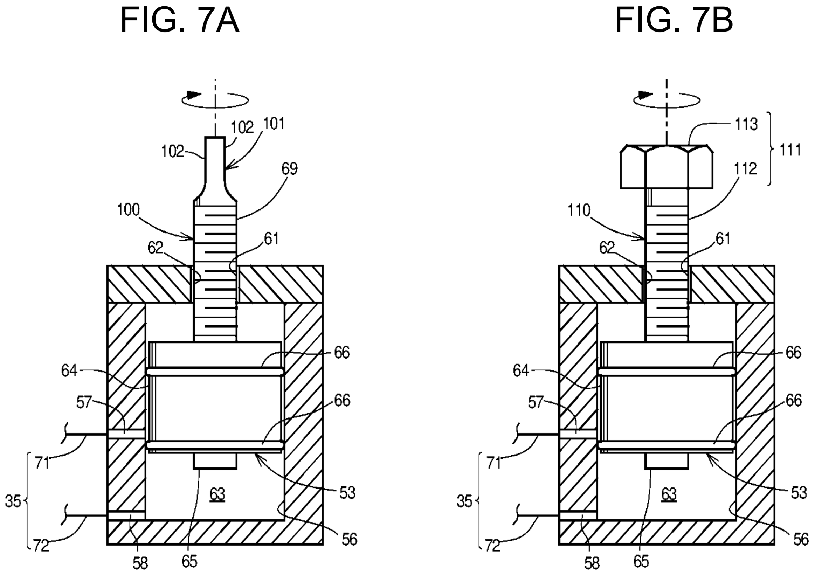

In the above-described embodiments, the hexagonal hole into which the hex key is inserted is described as an example of the operating portion; however, the present invention is not limited thereto. As illustrated in FIG. 7A, an operating portion 101 of a piston rod 100 may include a pair of flat surfaces 102 substantially parallel with each other. In this case, the piston rod 100 is rotated with the operating portion 101 gripped with a spanner, a wrench, or the like. Alternatively, as illustrated in FIG. 7B, a piston rod 110 may be replaced with a hex bolt 111, which is a general-purpose product, and a shank 112 of the hex bolt 111 may be welded to the piston 53 to be coupled and integrated. In this case, a head 113 of the hex bolt 111 corresponds to the operating portion, which reduces manufacturing costs of the cylinder mechanism.

In the above-described embodiments, the screw hole with the internal screw portion is formed in the cylinder cover, and the external screw portion that is screwed into the screw hole is formed in the piston rod; however, the present invention is not limited thereto. For example, a screw hole member with an internal screw portion made of a wear-resistant material may be attached to the cylinder cover, the piston rod may be made of a wear-resistant material, and the external screw portion may be formed in the piston rod. In this case, wear caused by screwing the external screw portion into the internal screw portion is prevented.

In the above-described embodiments, the cylinder mechanism is installed in the vehicle body so that the piston is moved up and down; however, the present invention is not limited thereto. For example, the cylinder mechanism may be installed on the vehicle body so that the piston is moved in a direction inclined relative to a vertical direction. In this case, a mechanism for preventing the hydraulic fluid from leaking from the cylinder chamber is preferably provided.

In the above-described embodiments, the cylinder mechanism is installed below the seat stand; however, the present invention is not limited thereto. The cylinder mechanism may be installed anywhere, but it is preferable to take routing of hydraulic pressure pipes and operability of the cylinder mechanism into consideration. For example, the cylinder mechanism may be installed in front of the driver's seat. In addition, the cylinder mechanism may be installed in a position where the operator can operate it while being seated.

In the above-described embodiments, the piston and the piston rod are coupled to each other by being formed integrally with each other; however, the present invention is not limited thereto. For example, the piston rod and the piston may be coupled to each other by welding as another example illustrated in FIGS. 7A and 7B. Alternatively, the piston rod and the piston may be coupled to each other by a method other than the welding, such as screwing, press-fitting, or shrink-fitting.

In the above-described embodiments, the hydraulic brake device for the battery-powered forklift truck is exemplified, but the present invention is not limited thereto and may be applied to, for example, an engine-powered forklift truck. The industrial vehicle may be an industrial vehicle including a hydraulic brake unit other than the forklift truck.

## Claims

1. A hydraulic brake device (32, 80) for an industrial vehicle (10) comprising:
a hydraulic pressure generator (33) configured to generate hydraulic pressure;
a brake unit (34) configured to generate a braking force;
a hydraulic fluid passage (35) through which the hydraulic pressure generator (33) and the brake unit (34) are connected to each other; and
a cylinder mechanism (36, 81) having a cylinder hydraulic fluid chamber (63, 90) and provided in the hydraulic fluid passage (35),
the hydraulic brake device (32, 80) being configured to release the braking force of the brake unit (34) by using the hydraulic pressure from the hydraulic pressure generator (33) and configured to cause the brake unit (34) to generate the braking force by releasing the hydraulic pressure in the hydraulic fluid passage (35),
the hydraulic fluid passage (35) including:
a first hydraulic fluid passage portion (71) through which the hydraulic pressure generator (33) and the cylinder hydraulic fluid chamber (63, 90) are connected to each other; and
a second hydraulic fluid passage portion (72) through which the cylinder hydraulic fluid chamber (63, 90) and the brake unit (34) are connected to each other,
the cylinder mechanism (36, 81) including:
a cylinder (51, 82) having a cylinder chamber (56, 87);
a cylinder cover (52) that closes an opening of the cylinder (51, 82);
a piston (53, 83) that is reciprocally movable in the cylinder chamber (56, 87);
a piston rod (54, 100, 110) that is coupled to the piston (53, 83) and that extends out from the cylinder chamber (56, 87) to an outside of the cylinder (51, 82); and
a blocking member that blocks the cylinder hydraulic fluid chamber (63, 90) from the first hydraulic fluid passage portion (71) depending on a position of the piston (53, 83) relative to the cylinder (51, 82), and
the cylinder hydraulic fluid chamber (63, 90) being defined by the cylinder (51, 82) and the piston (53, 83), **characterized in that**
the piston rod (54, 100, 110) has:
an external screw portion (69); and
an operating portion (55, 101) that is formed in an end portion of the piston rod (54, 100, 110) outside the cylinder (51, 82) and that is used to rotate the piston rod (54, 100, 110) and change a position of the piston (53, 83),
the cylinder cover (52) has an internal screw portion (62) into which the external screw portion (69) is screwed, and
with the rotation of the piston rod (54, 100, 110) via the operating portion (55, 101), the blocking member blocks the cylinder hydraulic fluid chamber (63, 90) from the first hydraulic fluid passage portion (71) and the piston (53, 83) is moved so that the hydraulic pressure in the cylinder hydraulic fluid chamber (63, 90) is increased for releasing the braking force of the brake unit (34).

2. The hydraulic brake device (32) for the industrial vehicle (10) according to claim 1, **characterized in that**
the blocking member is the piston (53).

3. The hydraulic brake device (32, 80) for the industrial vehicle (10) according to claim 1 or 2, **characterized in that**
the piston (53, 83) and the piston rod (54, 100, 110) are formed integrally with each other.

4. The hydraulic brake device (32, 80) for the industrial vehicle (10) according to claim 1 or 2, **characterized in that**
a sealing member (66) is attached to an outer peripheral surface of the piston (53, 83).

5. The hydraulic brake device (32, 80) for the industrial vehicle (10) according to claim 1 or 2, **characterized in that**
a vehicle body (11) of the industrial vehicle (10) is equipped with a seat stand (30) configured to be opened and closed and supporting a driver's seat (31), and
the cylinder mechanism (36, 81) is installed on the vehicle body (11) so that the operating portion (55, 101) is located below the seat stand (30).
